Europäisches Patentamt

(19) European Patent Office

Office européen des brevets

(11) Veröffentlichungsnummer : **0 101 694**
**B1**

(12) **EUROPÄISCHE PATENTSCHRIFT**

(45) Veröffentlichungstag der Patentschrift :
16.04.86

(51) Int. Cl.⁴ : **B 60 R 25/02**

(21) Anmeldenummer : 83900633.5

(22) Anmeldetag : 18.02.83

(86) Internationale Anmeldenummer :
**PCT/EP 83/00039**

(87) Internationale Veröffentlichungsnummer :
**WO/8303082 (15.09.83 Gazette 83/21)**

(54) VORRICHTUNG ZUM SPERREN DER DREHBEWEGUNG EINER LENKSÄULE.

(30) Priorität : 09.03.82 DE 3208375

(43) Veröffentlichungstag der Anmeldung :
07.03.84 Patentblatt 84/10

(45) Bekanntmachung des Hinweises auf die Patenterteilung : 16.04.86 Patentblatt 86/16

(84) Benannte Vertragsstaaten :
FR GB

(56) Entgegenhaltungen :
FR-A- 2 456 644
US-A- 1 443 958

(73) Patentinhaber : NEIMAN S.A.
39, Avenue Marceau
F-92400 Courbevoie (FR)

(72) Erfinder : WEBER, Günter
Bergerheide 54
D-5600 Wuppertal 1 (DE)

(74) Vertreter : Patentanwaltsbüro Cohausz & Florack
Schumannstrasse 97
D-4000 Düsseldorf 1 (DE)

**Beschreibung**

Die Erfindung betrifft eine Vorrichtung zum Sperren der Drehbewegung einer Lenksäule eines Kraftfahrzeuges durch ein in beide Drehrichtungen wirkendes Klemmgesperre mit achsparallelen Rollen, die in einem um die Lenksäulenachse verdrehbaren koaxialen Käfig geführt sind und die zwischen einer zylindrischen Laufbahn und zur Laufbahn schrägen Klemmflächen, die mit entgegengesetzten Neigungen angeordnet sind, in einer ersten Stellung sich verklemmen und in einer zweiten Stellung frei laufen, wobei die Klemmflächen symmetrisch über den Umfang der Lenksäule verteilt sind.

Eine solche Vorrichtung gemäß den Oberbegriff des Anspruchs 1 ist aus der FR-A-24 56 644 bekannt. Bei diesem bekannten Klemmgesperre sperrt jede Rolle beide Drehrichtungen, wobei der die Rollen führende Käfig von der Lenksäule bzw. einer auf der Lenksäule sitzenden Büchse mitgeschleppt wird von einer ersten Sperrstellung, in der eine Drehrichtung blockiert wird, in eine zweite Sperrstellung, in der die andere Drehrichtung blockiert wird. Zwischen den beiden Sperrstellungen besteht damit ein Spiel der Lenksäule und des Lenkrades, so daß ein begrenztes Lenken möglich ist. Darüber hinaus baut die bekannte Vorrichtung verhältnismäßig groß in radialer und axialer Richtung.

Aus der US-A-1 443 958 ist ein in nur einer Drehrichtung sperrendes Klemmgesperre für eine Lenksäule eines Kraftfahrzeuges bekannt mit einem auf der Lenksäule befestigten, kugelförmige Klemmteile und Schrägflächen aufweisenden Innenteil und einem das Innenteil umgebenden Außenring, auf dessen inneren Rollbahnen die Kugeln laufen. Eine Sperrwirkung tritt bei dieser Vorrichtung nur auf, wenn der in der nicht abgeschlossenen Stellung frei laufende Außenring durch einen radialen Bolzen gesperrt wird, der in Außenausnehmungen des Rings eingreift. Damit ist bei dieser bekannten Vorrichtung wie beim bisherigen Stand der Technik ein Bolzen zum Blockieren der Lenksäule erforderlich, der nur in bestimmten Drehstellungen sperrend eingreift. Damit der Bolzen seine sperrende Stellung einnehmen kann, muß der Ring durch das Lenkrad so weit gedreht werden, bis eine der Ausnehmungen des Rings dem Bolzen gegenüberliegt. Dies führt zu einer umständlichen und schwer handhabbaren Arbeitsweise. Bei dem bisher üblichen, in die Lenksäule eingreifenden Bolzen des bisherigen Standes der Technik wird diese umständliche Handhabe dadurch verbessert, daß der Bolzen ein Spiel besitzt und durch eine Feder gegen den Mantel der Lenksäule oder eine auf der Lenksäule sitzende Buchse so lange gedrückt wird, bis die Ausnehmung für den Bolzen erreicht ist. Dies führt aber dazu, daß bis zum Einrasten des Bolzens ein Spiel der Lenksäule besteht, das ein begrenztes Lenken des Fahrzeugs zuläßt.

Aufgabe der Erfindung ist es, ein Klemmgesperre der eingangs genannten Art derart zu verbessern, daß es bei leichter Handhabung, kleiner Bauweise und großer Kräfteaufnahme in der Sperrstellung sofort ohne Spiel blockiert.

Diese Aufgabe wird erfindungsgemäß dadurch gelöst, daß zwischen Laufbahn und Klemmflächen zum Sperren der ersten Drehrichtung ein erster Käfig mit Rollen vorgesehen ist, daß zum Sperren der zweiten Drehrichtung ein zweiter Käfig mit Rollen vorgesehen ist, und daß beide Käfige in entgegengesetzten Richtungen drehverstellbar sind.

Eine solche Vorrichtung sperrt bzw. blockiert die Lenksäule sofort in der Sperrstellung, ohne ein nachträgliches Einrasten zu erfordern oder ein geringfügiges Lenken in einer oder beiden Drehrichtungen zu ermöglichen. Die blockierende Stellung wird sofort erreicht, ohne sie nach Schlüsselabzug suchen zu müssen, so daß die Vorrichtung besonders leicht handhabbar ist und eine hohe Diebstahlsicherheit aufweist. Die Vorrichtung baut in axialer und radialer Richtung sehr klein und kann aufgrund der Anordnung von Käfigen eine hohe Anzahl von Rollen aufnehmen, so daß großen Kräften Widerstand entgegengesetzt werden kann. Hierdurch ist es auch nicht erforderlich, die Rollen des Klemmgesperres in einem großen Abstand zur Säulenachse anzuordnen. In dem Fall, in dem durch eine erhebliche Krafteinwirkung es gelingen sollte, die Sperrung in einer Drehrichtung aufzuheben, bleibt immer noch die Sperre in der anderen Drehrichtung erhalten, so daß eine doppelte Sicherheit gegeben ist.

Eine besonders einfache Handhabe der Käfige ist dann gegeben, wenn an jedem Käfig ein Teil insbesondere radial vorsteht, durch die die Käfige drehverstellbar sind. Ferner können die Käfige insbesondere über die vorstehenden Teile durch ein von einem Schloß bewegtes Teil drehverstellbar sein. Hierdurch ist eine direkte Betätigung der Käfige ohne weitere Zwischenteile möglich.

Eine besonders einfache und sichere Konstruktion ist dann gegeben, wenn die insbesondere radial vorstehenden Teile über Keilgetriebe von einem Schloß bewegbar sind. Dabei können die vom Schloß betätigten Schrägflächen des Keilgetriebes von einem rechtwinklig oder achsparallel zur Schloßzylinderachse beweglichen Teil gebildet werden. Alternativ wird hierzu vorgeschlagen, daß die vorstehenden Teile von Kurven eines Schlosses bewegbar sind.

Besonders geringe Abmessungen in axialer Richtung weist die Vorrichtung dann auf, wenn die beiden etwa zylindrischen koaxialen Käfige gleichen Durchmessers Sektoren aufweisen, die derart abwechselnd ineinandergreifen, daß die Rollen beider Käfige etwa in derselben Höhe zur Lenksäule liegen und zwischen den Sektoren Freiräume sind, die die Drehverstellbarkeit der Käfige ermöglichen.

Eine sehr einfache Konstruktion mit geringen radialen Abmessungen wird dann erreicht, wenn die Käfige auf der Lenksäule in axialer Richtung übereinander angeordnet sind. Dabei können die an den Käfigen vorstehenden Teile an einander benachbarten Bereichen der Käfige vorgesehen sein, so daß die beiden zu betätigenden vorstehenden Teile nahe beieinander liegen und damit von einem Schloß oder weiteren Betätigungsteilen leicht erreichbar sind. Alle Elemente sind in diesem Falle für beide Sperrichtungen vollkommen gleich, nur gestürzt angeordnet.

Die erfindungsgemäße Vorrichtung kann ähnlich einer Innenfreilaufkupplung aufgebaut sein, wobei dann die zylindrischen Laufbahn(en) von der Mantelfläche der Lenksäule oder einer auf der Lenksäule sitzenden Büchse gebildet wird (werden) und die schrägen Klemmflächen von Ausnehmungen in einenm feststehenden Umgebungsteil gebildet werden. Dies ermöglicht besonders geringe Abmessungen in radialer Richtung.

Ferner kann die Vorrichtung ähnlich einer Außenfreilaufkupplung aufgebaut sein, wobei auf der Lenksäule ein topfförmiges Teil koaxial drehfest angeordnet ist, die Innenseite des zylindrischen Mantels des topfförmigen Teils die zylindrische Laufbahn bildet und die schrägen Klemmflächen von einem Ringteil gebildet sind, das innerhalb des Mantels koaxial angeordnet ist. Hierdurch kann die Vorrichtung im sperrenden Zustand besonders große Drehkräfte aufnehmen.

Ausführungsbeispiele der Erfindung sind in den Zeichnungen dargestellt und werden im folgenden näher beschrieben. Es zeigen :

Figur 1 einen Schnitt durch die Vorrichtung quer zur Säulenachse mit daran befestigtem Zylinderschloß ;

Figur 2 das Klemmgesperre als Ausschnitt aus Fig. 1 in vergrößertem Maßstab in nicht sperrender Stellung ;

Figur 3 das Gesperre nach Fig. 2 in sperrender Stellung ;

Figur 4 eine Draufsicht auf den ersten Käfig im nicht eingebauten Zustand ;

Figur 5 einen Schnitt nach V-V in Fig. 4 ;

Figur 6 eine Draufsicht auf den zweiten Käfig im nicht eingebauten Zustand ;

Figur 7 einen Schnitt nach VII-VII in Fig. 6 ;

Figur 8 einen axialen Schnitt durch ein zweites Ausführungsbeispiel ;

Figur 9 einen Schnitt nach IX-IX in Fig. 8, in der oberen Hälfte in der blockierenden Stellung und in der unteren Hälfte in freier Stellung ;

Figur 10 ein drittes Ausführungsbeispiel mit zwei übereinander angeordneten Käfigen als Seitenansicht und teilweise geschnitten ; und

Figur 11 eine Draufsicht auf das dritte Ausführungsbeispiel teilweise durchbrochen.

Um eine Lenksäule 1 bzw. Lenkspindel eines Kraftfahrzeuges ist ein zweischaliges zylindrisches Gehäuse 2 koaxial zur Lenksäulenachse befestigt. Die beiden halbzylindrischen Schalenhälften 2a und 2b des Gehäuses 2 sind durch Abreißschrauben 3 aneinander befestigt. Im Innern des Gehäuses 2 ist koaxial eine zylindrische Büchse 4 drehfest gelagert, die in ihrer Innenwandung Ausnehmungen 5 aufweist, die zur Laufbahn schräge, gerade oder gebogene Klemmflächen 6 für zylindrische Rollen 7a und 7b aufweisen. Die Rollen 7a und 7b laufen auf einer inneren zylindrischen Laufbahn 8, die von der Außenfläche der Lenksäule 1 gebildet wird. Alternativ kann auch auf der Lenksäule 1 eine Buchse koaxial sitzen, deren Außenmantel die Laufbahn 8 bildet.

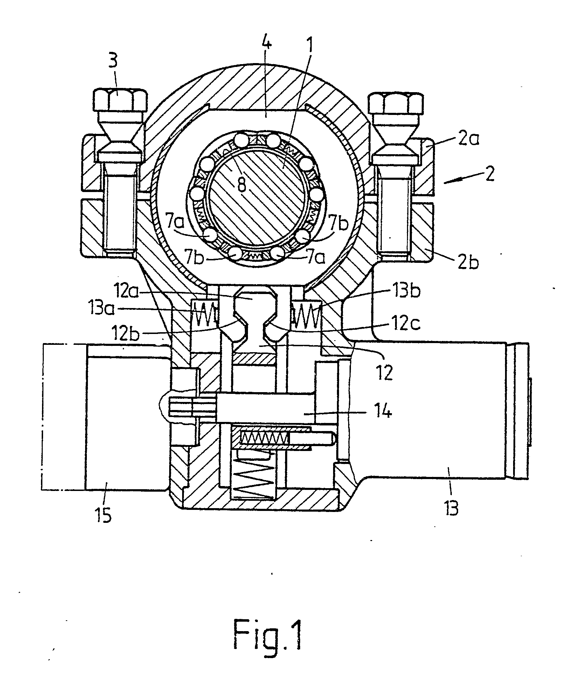

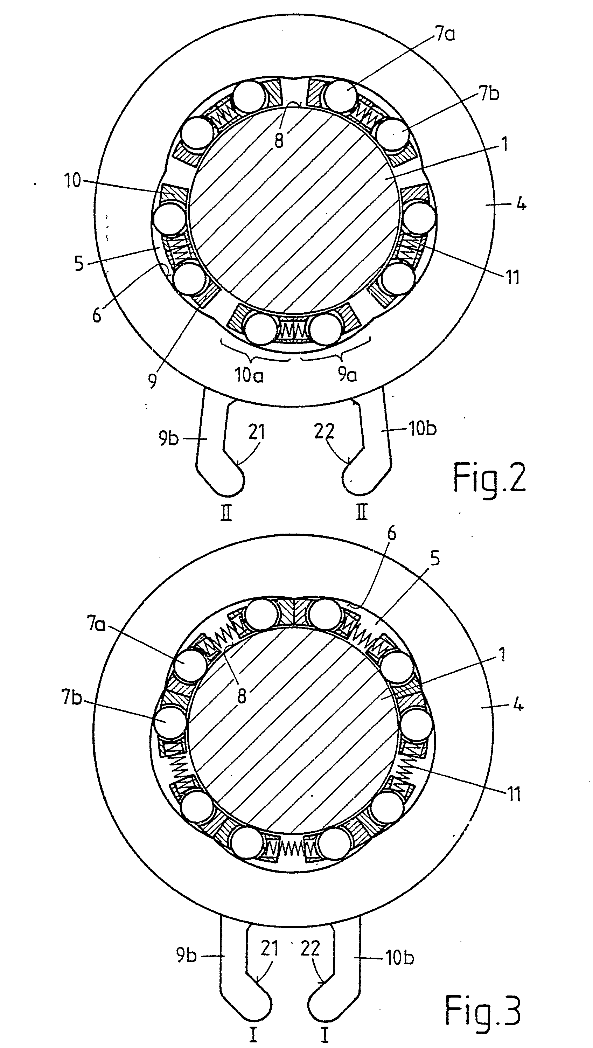

In den Figuren 1 und 3 ist die klemmende bzw. blockierte erste Stellung der Rollen dargestellt, während Fig. 2 die freie zweite Stellung zeigt. In der ersten Stellung I verklemmen sich die Rollen 7a und 7b zwischen Fläche 6 und Bahn 8, so daß die Lenksäule 1 drehfest ist gegenüber der Büchse 4. In der zweiten Stellung II ist die Lenksäule 1 frei drehbar.

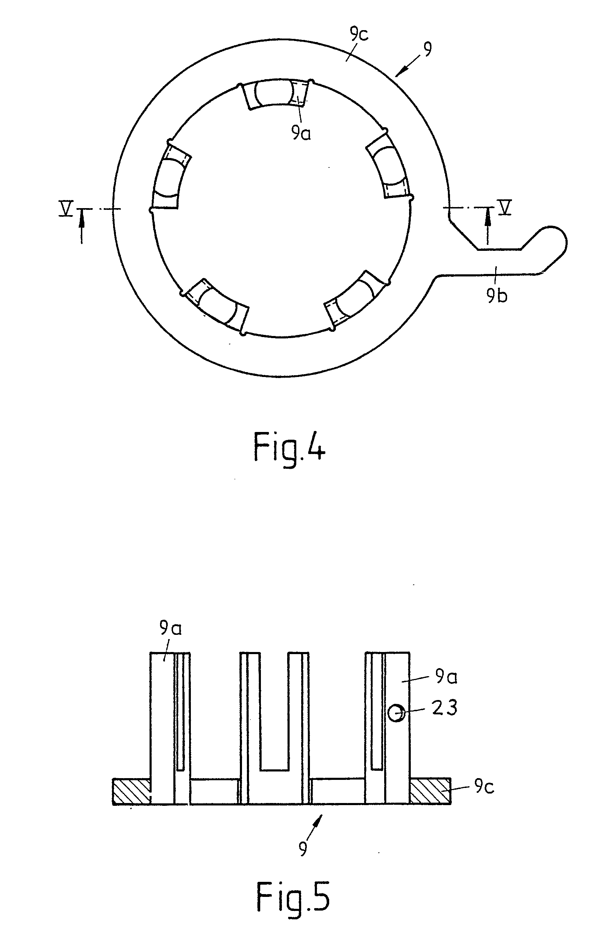

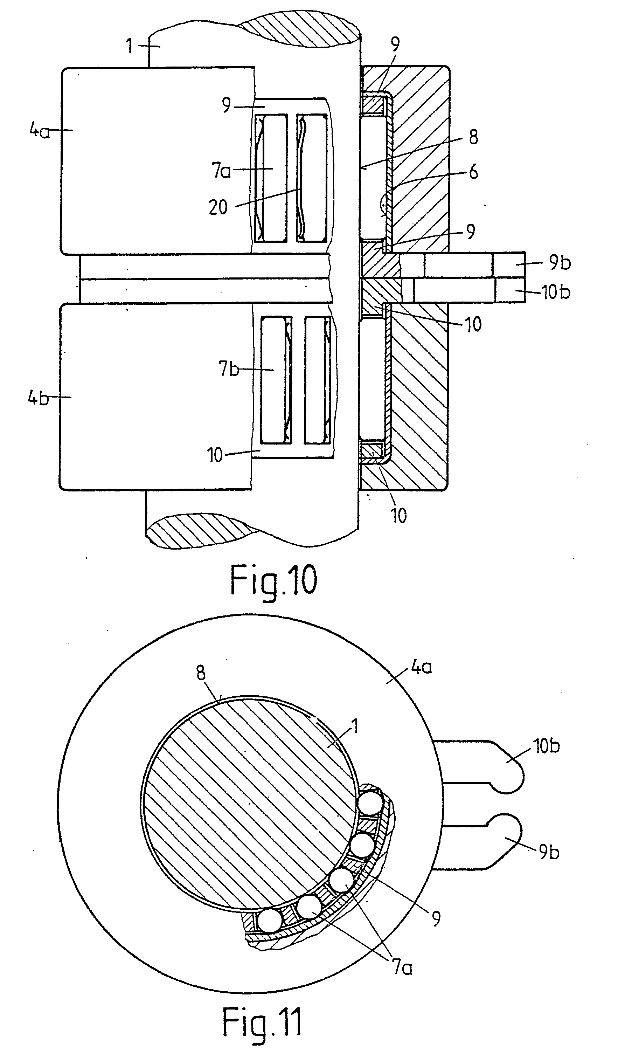

Eine Hälfte der koaxialen Rollen, und zwar die Rollen 7a, sind in einem ersten Käfig 9, und die zweite Hälfte der Rollen, und zwar die Rollen 7b, sind in einem zweiten Käfig 10 drehbar gelagert. Während in Fig. 10 die beiden Käfige axial übereinander angeordnet sind, durchdringen sich bei den Ausführungsbeispielen nach den Figuren 1 bis 9 die beiden Käfige mit Sektoren 9a bzw. 10a kammartig. Wie in den Figuren 4 bis 7 dargestellt, sind die Sektoren jeweils an einem Ring 9c bzw. 10c achsparallel zur Lenksäulenachse befestigt, wobei jeder Sektor eine Rolle 7a oder 7b aufnimmt und die Sektoren beider Käfige einander abwechseln, so daß ein Sektor des einen Käfigs immer zwischen zwei Sektoren eines anderen Käfigs liegt. Von Bedeutung ist hierbei, daß die fingerartigen Sektoren jeweils die Form eines Ausschnitts einer Zylinderwandung bzw. Hülsenwandung haben und zwischen den Sektoren genügend Freiraum ist, um eine Drehverstellung der beiden Büchsen von der klemmenden Stellung I zur freien Stellung II und umgekehrt zu ermöglichen. Für je zwei Rollen 7a, 7b zweier unterschiedlicher Käfige 9, 10 angehöriger Sektoren 9a, 10a ist eine Ausnehmung 5 in der drehfesten Büchse 4 vorgesehen. Die im ersten Käfig 9 vorgesehenen Rollen 7a blockieren die Lenksäule 1 in einer ersten Drehrichtung, in den Zeichnungen kann sich dann die Lenksäule 1 nicht mehr entgegengesetzt dem Uhrzeigersinn drehen, und der Käfig 10 blockiert mit seinen Rollen 7b die Lenksäule in der entgegengesetzten Drehrichtung, in den Zeichnungen im Uhrzeigersinn.

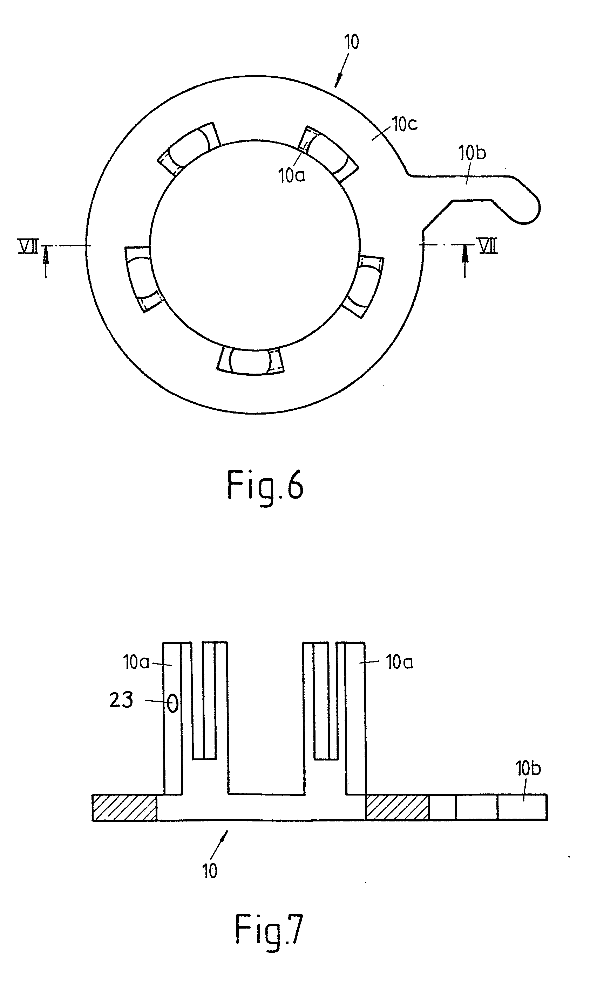

Da es aufwendig ist, die Rollen in den Käfigen so exakt zu lagern, daß bei einer Bewegung der Käfige in die klemmende Stellung alle Rollen gleichzeitig und mit gleicher Intensität klemmen, sind die Rollen in den Käfigen bzw. Käfigsektoren mit so großem Spiel gelagert, daß sie sich achsparallel in Richtung der Sektorenbewegung individuell verschieben können. Diese achsparallele und individuelle Verschiebung wird durch den Druck von Federn 11 ermöglicht bzw. unterstützt, die in den Sektoren gelagert sind. Dadurch besteht eine gleichmäßige Verteilung der Kräfte auf alle Rollen und damit eine gleichmäßige Kraftverteilung auf die inneren und äußeren Ringe. Hierzu weist, wie in den Figuren 5 und 7 dargestellt, jeder Sektor eine Bohrung 23 auf, wobei die Bohrungen so angeordnet sind, daß je eine Feder in zwei Sektoren unterschiedlicher Käfige einliegt, so daß eine Schraubendruckfeder 11 eine Rolle 7a und eine Rolle 7b zur klemmenden Richtung hin beaufschlagt. Statt einer einzigen zur Laufbahn 8 tangentialen Feder können auch zwei Federn an einem Rollenpaar 7a, 7b in der Nähe der beiden Enden der Rollen angeordnet sein.

An jedem Käfigring 9c und 10c ist jeweils ein etwa radialer Betätigungshebel 9b bzw. 10b angeformt, die so weit außen vorstehen, daß sie die Büchse 4 überragen, um von außen betätigt werden zu können. In dem Ausführungsbeispiel nach Fig. 1 liegt zwischen den nahe beieinander liegenden Betätigungsteilen 9b und 10b der Kopf eines beweglichen Teiles 12, das von einem Zylinderschloß 13 betätigt wird. Der Kopf 12a ist über eine Einschnürung mit dem übrigen Bereich des Teils 12 verbunden, wobei der Kopf im Bereich der Einschnürung Schrägflächen 12b und 12c bildet, die mit entsprechenden Schrägflächen 21 und 22 auf den Innenseiten der Teile 9b und 10b zusammenarbeiten, so daß diese Schrägflächen ein Keilgetriebe bilden, wenn das radial zur Lenksäule 1 angeordnete bolzenförmige Teil axial bewegt wird, um die Betätigungsteile 9b und 10b und damit die Käfige 9 und 10 gegen die Drücke der Federn 11 aus der ersten Stellung in die zweite Stellung auseinanderzubewegen. Dabei können noch weitere Federn 13a und 13b an den Außenseiten der Betätigungsteile 9b und 10b vorgesehen sein (Fig. 1), deren Druck zusätzlich überwunden werden muß. Diese Federn sind besonders dann erforderlich, wenn die Federn 11 fehlen.

Das bolzenförmige Teil 12 wird durch Drehung einer Walze 14 des Zylinderschlosses 13 betätigt, wobei das Getriebe zwischen 12 und 14 ein Zahnstangengetriebe oder ein Exzentergetriebe sein kann. Die am Zylinderkern des Schlosses 13 befestigte Walze 14 treibt mit ihrem freien Ende ferner einen Schalter 15 an.

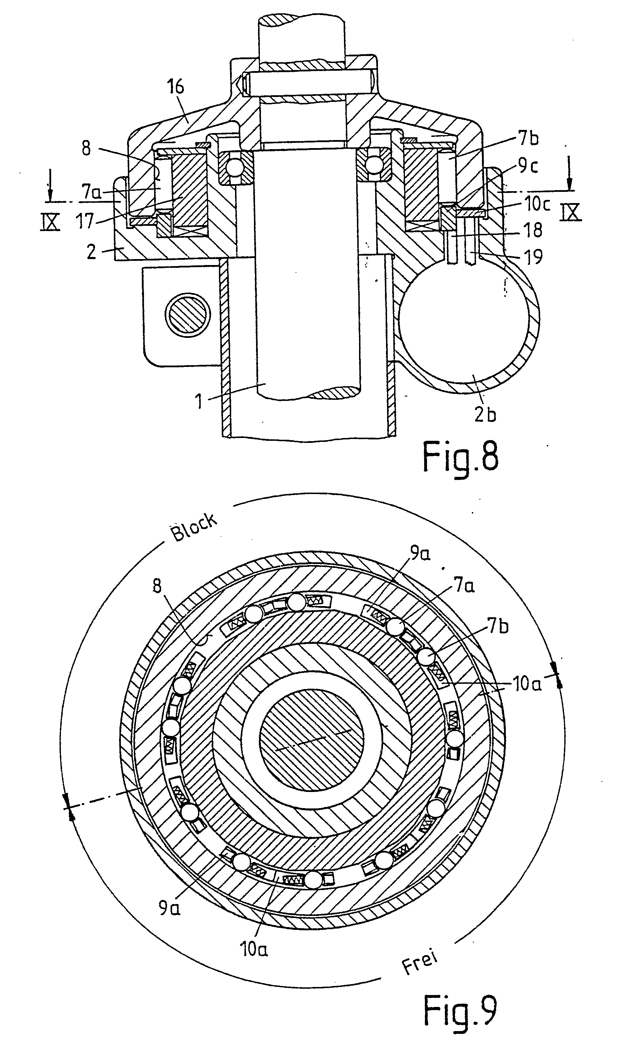

Während bei dem Ausführungsbeispiel nach den Figuren 1 bis 7 das Klemmgesperre ähnlich einem Innenfreilauf aufgebaut ist, unterscheidet sich das Ausführungsbeispiel nach den Figuren 8 und 9 vom ersten im wesentlichen nur dadurch, daß das Klemmgesperre wie ein Außenfreilauf aufgebaut ist. Auf der Lenksäule 1 ist ein topfförmiges Teil 16 drehfest angeordnet, das beide Käfige übergreift, wobei der Innenmantel des Teils 16 die Laufbahn 8 für die Rollen 7a, 7b bildet. Die die Klemmflächen 6 bildenden Ausnehmungen oder Flächen 5 sind in einem Innenring 17 an dessen Außenseite vorgesehen, der drehfest in dem Gehäuse 2 angeordnet ist, das auch das Zylinderschloß trägt. Für das nicht dargestellte Zylinderschloß ist eine Ausnehmung 2b im Gehäuse 2a vorgesehen, wobei vom Zylinderschloß Betätigunsteile 18, 19 ausgehen, die den Betätigungsteilen 9b und 10b entsprechen, aber nicht radial, sondern achsparallel zur Lenksäule 1 angeordnet sind. Das Betätigungsteil 18 ist mit dem ersten Käfig bzw. dem Ring 9c des ersten Käfigs, und das Betätigungsteil 19 mit dem Ring 10c des zweiten Käfigs 10 verbunden, um eine Drehverstellung der Käfige zu erreichen. Die Sektoren 9a, 10a beider Käfige sind wiederum kammartig ineinandergeschachtelt. Die Käfige bzw. Käfigteile dieser Ausführung weisen einen erheblich größeren Durchmesser als beim ersten Ausführungsbeispiel auf, da die Käfige nicht direkt an dem Mantel der Lenksäule 1 sich befinden.

Statt durch ein Keilgetriebe kann bei beiden Ausführungsbeispielen das Schloß die Käfige durch ein Kurvengetriebe, durch Gestänge oder andere übliche Mittel drehverstellen. Ferner können statt Schraubendruckfedern auch andere Federmittel, insbesondere Blattfedern 20 angeordnet sein. Die in Fig. 9 dargestellten Federn unterscheiden sich von denen nach dem ersten Ausführungsbeispiel dadurch, daß für jede Rolle eine Schraubendruckfeder vorgesehen ist. Bei dem dritten Ausführungsbeispiel nach Fig. 10 und 11 sind zwei Käfige 9 und 10 koaxial übereinander angeordnet, so daß kammartig ineinander eingreifende Sektoren wie bei den ersten beiden Ausführungsbeispielen nicht erforderlich sind. Die Arbeitsweise ist bei diesem Ausführungsbeispiel dieselbe wie bei den zwei zuvor genannten, da wiederum ein Käfig eine Drehrichtung sperrt und der zweite Käfig die entgegengesetzte. Die an den Käfigen befestigten Betätigungsteile 9b und 10b sind in diesem Ausführungsbeispiel an den einander anliegenden Stirnseiten der Käfige angeordnet, so daß diese Betätigungsteile nahe beieinander, insbesondere aneinander liegen und keine zusätzlichen Gestänge erforderlich sind, um sie durch das Zylinderschloß zu betätigen. Die Büchse 4 ist quer zur Achse zweigeteilt, wobei zwischen den Stirnseiten der Büchsenhälften 4a, 4b die Ringe der beiden Käfige und damit die Betätigungsteile liegen und geführt sind. Die gestürzt übereinander angeordneten Elemente können vollkommen gleich gestaltet sein.

**Patentansprüche**

1. Vorrichtung zum Sperren der Drehbewegung einer Lenksäule (1) eines Kraftfahrzeuges durch ein in beide Drehrichtungen wirkendes Klemmgesperre mit achsparallelen Rollen (7a), die in einem um die Lenksäulenachse verdrehbaren koaxialen Käfig (9) geführt sind und die zwischen einer zylindrischen Laufbahn und zur Laufbahn schrägen Klemmflächen (6), die mit entgegengesetzten Neigungen angeordnet sind, in einer ersten Stellung sich verklemmen und in einer zweiten Stellung frei laufen, wobei die Klemmflächen symmetrisch über den Umfang der Lenksäule verteilt sind, dadurch gekennzeichnet, daß der Käfig von zwei Käfigen gebildet ist, daß zwischen Laufbahn und Klemmflächen zum Sperren der ersten Drehrichtung der erste mit Rollen (7a) versehene Käfig (9) angeordnet ist, daß zum Sperren der zweiten Drehrichtung der zweite mit Rollen (7b) versehene Käfig (10) angeordnet ist, und daß beide Käfige (9, 10) in entgegengesetzten Richtungen drehverstellbar sind.

2. Vorrichtung nach Anspruch 1, dadurch gekennzeichnet, daß an jedem Käfig (9, 10) ein Teil (9b, 10b) insbesondere radial vorsteht, durch die die Käfige (9, 10) drehverstellbar sind.

3. Vorrichtung nach Anspruch 2, dadurch gekennzeichnet, daß die Käfige (9, 10) insbesondere über die vorstehenden Teile (9b, 10b) durch ein von einem Schloß (13) bewegtes Teil (12) drehverstellbar sind.

4. Vorrichtung nach Anspruch 2 oder 3, dadurch gekennzeichnet, daß die insbesondere radial vorstehenden Teile (9b, 10b) über Keilgetriebe von einem Schloß bewegbar sind.

5. Vorrichtung nach Anspruch 4, dadurch gekennzeichnet, daß vom Schloß (13) betätigte Schrägflächen des Keilgetriebes von einem rechtwinklig oder achsparallel zur Schloßzylinderachse beweglichen Teil (12) gebildet werden.

6. Vorrichtung nach Anspruch 2 oder 3, dadurch gekennzeichnet, daß die vorstehenden Teile von Kurven eines Schlosses bewegbar sind.

7. Vorrichtung nach einem der Ansprüche 1 bis 6, dadurch gekennzeichnet, daß die beiden etwa zylindrischen koaxialen Käfige (9, 10) gleichen Durchmessers Sektoren (9a, 10a) aufweisen, die derart abwechselnd ineinandergreifen, daß die Rollen (7a, 7b) beider Käfige etwa in derselben Höhe zur Lenksäule liegen und zwischen den Sektoren (9a, 10a) Freiräume sind, die die Drehverstellbarkeit der Käfige ermöglichen.

8. Vorrichtung nach einem der Ansprüche 1 bis 6, dadurch gekennzeichnet, daß die Käfige (9, 10) auf der Lenksäule (1) in axialer Richtung übereinander angeordnet sind.

9. Vorrichtung nach Anspruch 8, dadurch gekennzeichnet, daß die an den Käfigen (9, 10) vorstehenden Teile (9b, 10b) an einander benachbarten Bereichen der Käfige (9, 10) vorgesehen sind.

10. Vorrichtung nach einem der Ansprüche 1 bis 9, dadurch gekennzeichnet, daß die zylindrischen Laufbahn(en) (8) von der Mantelfläche der Lenksäule (1) oder einer auf der Lenksäule sitzenden Büchse gebildet wird (werden) und die schrägen Klemmflächen (6) von Ausnehmungen (5) in einem feststehenden Umgebungsteil (4) gebildet werden.

11. Vorrichtung nach einem der Ansprüche 1 bis 9, dadurch gekennzeichnet, daß auf der Lenksäule ein topfförmiges Teil (16) koaxial drehfest angeordnet ist, die Innenseite des zylindrischen Mantels des topfförmigen Teils die zylindrische Laufbahn (8) bildet, und die schrägen Klemmflächen von einem Ringteil (17) gebildet sind, das innerhalb des Mantels koaxial angeordnet ist.

**Claims**

1. Device for locking the rotary movement of a steering column (1) of a motor vehicle by means of a clamping locking mechanism acting in both directions of rotation and having axially parallel rollers (7a) guided in a coaxial cage (9) rotatable about the steering column axis and which, in a first position, become jammed between a cylindrical track and clamping faces (6) oblique to the track and disposed with opposite angles of inclination and which run freely in a second position, the clamping faces being distributed symmetrically over the periphery of the steering column, characterised in that the cage is formed by two cages and in that the first cage (9) provided with rollers (7a) is disposed between the track and the clamping faces in order to lock the first direction of rotation and in that for locking the second direction of rotation, the cage (10) is provided and comprises rollers (7b) and in that both cages (9, 10) are rotatably adjustable in opposite directions.

2. Device according to Claim 1, characterised in that on each cage (9, 10) there is an in particular radially projecting part (9b, 10b) by which the cages (9, 10) are rotatingly adjustable.

3. Device according to Claim 2, characterised in that the cages (10), are rotatingly adjustable by a part (12) moved by a lock (13) via the projecting parts (9b, 10b).

4. Device according to Claim 2 or 3, characterised in that the in particular radially projecting parts (9b, 10b) are capable of being moved by a lock through a tapered transmission.

5. Device according to Claim 4, characterised in that oblique faces of the tapered transmission, actuated by the lock (13), are constituted by a part (12) adapted for movement at a right angle to or axially parallel with the axis of the lock cylinder.

6. Device according to Claim 2 or 3, characterised in that the projecting parts can be moved by cams of a lock.

7. Device according to one of Claims 1 to 6, characterised in that the two substantially cylindrical coaxial cages (9, 10) of the same diameter comprise segments (9a, 10a) which interengage alternately in such a way that the rollers (7a, 7b) of both cages are substantially at the same heigt in relation to the steering column and in that there are between the segments (a, 10a) clear spaces which permit the rotary adjustability of the cages.

8. Device according to one of Claims 1 to 6, characterised in that the cages (9, 10) are disposed on the steering column (1) so as to be one above the other in an axial direction.

9. Device according to Claim 8, characterised in that the parts (9b, 10b) projecting from the cages (9, 10) are provided on mutually adjacent areas of the cages (9, 10).

10. Device according to one of Claims 1 to 9, characterised in that the cylindrical track(s) (8) is/are formed by the outer shell of the steering column (1) or a bush mounted on the steering column, the oblique clamping faces (6) being formed by recesses (5) in a fixed enclosing part (4).

11. Device according to one of Claims 1 to 9, characterised in that coaxially and rotationally rigidly disposed on the steering column is a pot-shaped part (16), the inside of the cylindrical shell of the pot-shaped part forming the cylindrical track (8) while the oblique clamping faces are formed by an annular part (17) disposed coaxially within the shell.

**Revendications**

1. Dispositif pour bloquer la rotation de l'arbre de direction (1) d'un véhicule automobile par un arrêt à coincement agissant dans les deux sens de rotation, avec des rouleaux (7a) à axes parallèles qui sont guidés dans une cage (9) coaxiale rotative autour de l'axe de l'arbre de direction et qui se coincent, dans une première position, entre un chemin de roulement cylindrique et des surfaces de coincement (6) obliques par rapport au chemin de roulement et qui, dans une seconde position, roulent librement, les surfaces de coincement étant réparties symétriquement sur la périphérie de l'arbre de direction, caractérisé en ce que la cage est formée par deux cages, que la première cage (9) munie de rouleaux (7a) est disposée entre le chemin de roulement et les surfaces de coincement pour bloquer le premier sens de rotation, que la seconde cage (10) munie de rouleaux (7b) est disposée pour bloquer le second sens de rotation, et que les deux cages (9, 10) sont réglables en rotation en direction opposées.

2. Dispositif selon la revendication 1, caractérisé en ce qu'une partie (9b, 10b) fait saillie, en particulier radialement, de chaque cage (9, 10) par laquelle les cages (9, 10) sont réglables en rotation.

3. Dispositif selon la revendication 2, caractérisé en ce que les cages (9, 10) sont réglables en rotation par une pièce (12) déplacée par une serrure (13), en particulier par l'intermédiaire des parties en saillie (9b, 10b).

4. Dispositif selon la revendication 2 ou 3, caractérisé en ce que les parties en saillie (9b, 10b), en particulier radialement, sont déplaçables par une serrure par l'intermédiaire d'une transmission à coincement.

5. Dispositif selon la revendication 4, caractérisé en ce que les surfaces de coincement de la transmission à coincement actionnées par la serrure (13) sont formées par une pièce (12) mobile perpendiculairement ou axialement par rapport à l'axe du cylindre de serrure.

6. Dispositif selon la revendication 2 ou 3, caractérisé en ce que les parties en saillie sont déplaçables par les cames d'une serrure.

7. Dispositif selon l'une des revendications 1 à 6, caractérisé en ce que les deux cages (9, 10) coaxiales sensiblement cylindriques présentent des secteurs (9a, 10a) de même diamètre, que les rouleaux (7a, 7b) des deux cages s'étendent sensiblement sur la même hauteur de l'arbre de direction et que des volumes libres existent entre les secteurs (9a, 10a) qui permettent le réglage en rotation des cages.

8. Dispositif selon l'une des revendications 1 à 6, caractérisé en ce que les cages (9, 10) sont disposées sur l'arbre de direction (1) l'une sur l'autre en direction axiale.

9. Dispositif selon la revendication 8, caractérisé en ce que les parties (9b, 10b) en saillie des cages (9, 10) sont prévues dans des zones des cages (9, 10) adjacentes les unes des autres.

10. Dispositif selon l'une des revendications 1 à 9, caractérisé en ce que le ou les chemins de roulements (B) cylindriques sont formés par la surface enveloppe de l'arbre de direction (1) ou par une douille montée sur l'arbre de direction et les surfaces de coincement inclinées (6) sont formées par des évidements (5) dans une pièce d'entourage fixe (4).

11. Dispositif selon l'une des revendications 1 à 9, caractérisé en ce qu'une pièce (16) en forme de pot est montée coaxiale solidaire en rotation sur l'arbre de direction, la face intérieure de la chemise cylindrique de la pièce en forme de pot forme le chemin de roulement cylindrique (8) et les surfaces de coincement inclinées sont formées par une pièce annulaire (17) qui est disposée coaxialement à l'intérieur de l'enveloppe.

Fig.1

Fig.2

Fig.3

2

Fig.4

Fig.5

Fig.6

Fig.7

**0 101 694**

Fig.8

Fig.9

5

Fig.10

Fig.11